# EUROPEAN PATENT SPECIFICATION

(11) **EP 3 576 468 B1**
(45) Date of publication and mention of the grant of the patent: **10.09.2025**
(21) Application number: 18744180.3
(22) Date of filing: 23.01.2018
(51) Int. Cl.: H04W 52/02, H04W 74/08

(54) **ON-DEMAND PROCESSING METHOD, USER EQUIPMENT, AND BASE STATION**
VERFAHREN ZUR ON-DEMAND-VERARBEITUNG, BENUTZERGERÄT UND BASISSTATION
PROCÉDÉ DE TRAITEMENT À LA DEMANDE, ÉQUIPEMENT UTILISATEUR ET STATION DE BASE

(30) Priority: 24.01.2017 CN 201710060320
(43) Date of publication of application: 04.12.2019
(73) Proprietor: NTT DOCOMO, INC., Tokyo (JP)
(72) Inventor: WANG, Jing, Beijing 100190 (CN); LIU, Liu, Beijing 100190 (CN); JIANG, Huiling, Beijing 100190 (CN); HARADA, Hiroki, Chiyoda-ku, Tokyo 100-6150 (JP); NAGATA, Satoshi, Chiyoda-ku, Tokyo 100-6150 (JP)
(74) Representative: Hoffmann Eitle
(86) International application number: PCT/CN2018/073816
(87) International publication number: WO 2018/137615

(56) References cited:
- EP-A1- 2 747 508
- WO-A1-2016/040812
- WO-A1-2016/198909
- CN-A- 103 179 513
- CN-A- 106 171 011
- CN-A- 106 171 011
- CN-A- 106 656 442
- CN-A- 106 714 272
- CN-A- 107 079 268
- INTEL: "Support of Light Connection", vol. RAN WG3, no. Sophia Antipolis, France; 20161010 - 20161014, 1 October 2016 (2016-10-01), XP051163090, Retrieved from the Internet <URL:http://www.3gpp.org/ftp/tsg_ran/WG3_Iu/TSGR3_93bis/Docs/> [retrieved on 20161001]

## Description

### TECHNICAL FIELD

The present invention relates to a field of communications, and in particular to an on-demand processing method performed in a communication system as well as corresponding user equipment and base station.

### BACKGROUND

In the 5G new radio (NR) scenario, a UE may include three different states: an idle state, an inactive state, and a connected state. In the idle state, a user identifier of the UE is not known at a network side, and the UE periodically monitors a system message broadcast (MIB and a part of the SIB) from the base station, and is in a low power mode. In the inactive state, the user identifier of the UE is known at the network side, therefore, although the UE is not activated, an uplink reference signal such as an uplink channel quality measurement signal SRS or the like may be transmitted. In the connected state, the UE will normally receive and transmit data.

However, regardless of a scenario for single beam or multi beams in 5G, for the UE, especially for UEs in the idle state and the inactive state, it will result in excessive energy consumption in a communication system and excessive network interference in the system when all signaling transmitted by the base station in the network is in always-on state.

Therefore, there is a need for a signaling processing manner that can save energy and avoid network interference as much as possible.
CN 106 171 011 A relates to a method and a device for transmitting system information, and belongs to the technical field of communication. The method comprises: in a random access process, sending a third random access message with a system information request to a base station, the system information request being used to request system information; receiving a fourth random access message with the system information, the fourth random access message being sent by the base station; and reading the system information from the fourth random access message.

### SUMMARY OF THE INVENTION

The invention is achieved by the steps and the units described in the attached claims.

The method of carrying out on-demand processing in the communication systems as well as the corresponding user equipment and the base station according to the embodiment of the present invention, can enable part of signaling in the communication system to be transmitted in a form of on-demand signaling through the user equipment triggering the base station, thereby reducing the energy consumption of the system, and reducing the network interference resulted from the always-on signaling in the prior art.

### BRIEF DESCRIPTION OF THE DRAWINGS

The above and other objects, features and advantages of the present disclosure will become more apparent by describing embodiments of the present disclosure in more details with reference to the drawings. The drawings are intended to provide a further understanding of the embodiments of the present invention. In the drawings, the same reference numerals generally refer to the same components or steps.
FIG. 1 is a schematic diagram of a method of carrying out on-demand processing performed by a UE according to an embodiment of the present invention;
FIG. 2 is a schematic diagram of transmission steps of a competitive random access procedure of legacy LTE;
FIG. 3 is a schematic diagram of transmission steps of a random access procedure in an application scenario of 5G NR;
FIG. 4 is a schematic diagram of transmission steps of a random access procedure in an mMTC or URLLC scenario of 5G NR;

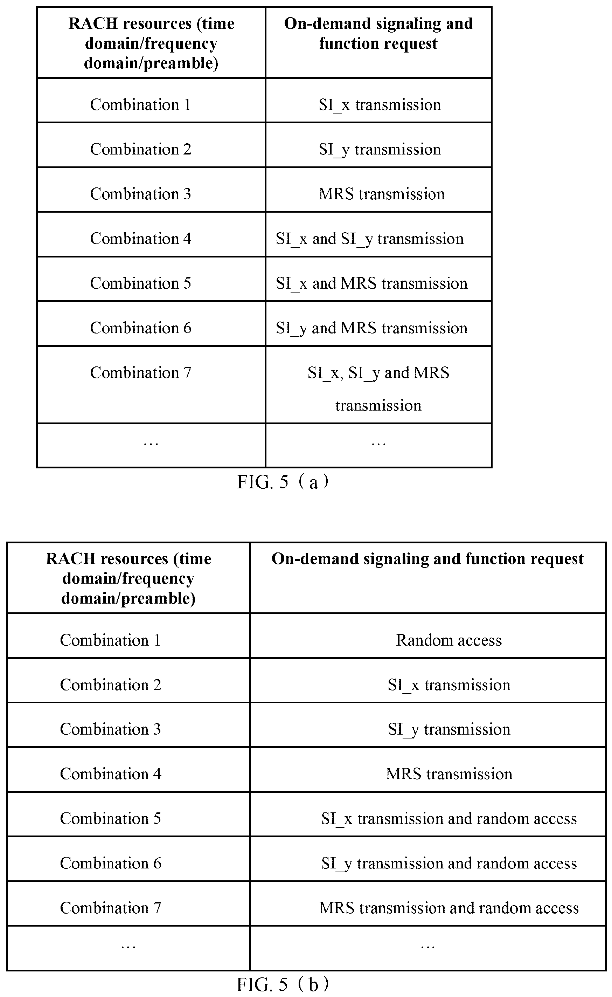

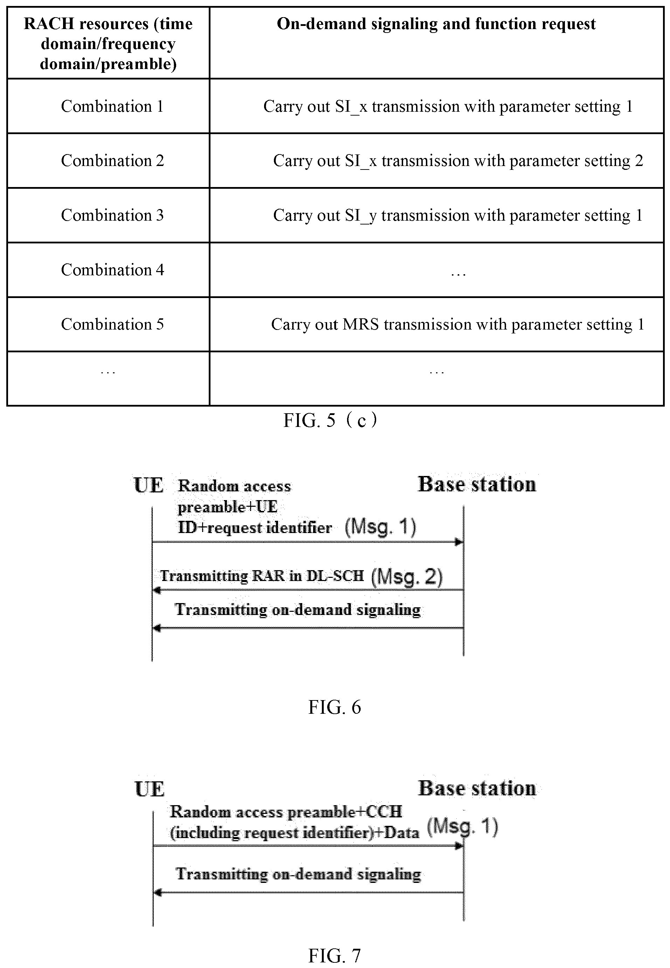

FIG. 5 is a schematic diagram of a correspondence between random access channel resources and an on-demand signaling in an embodiment of the present invention, where FIG. 5(a) is a correspondence between a combination of the random access channel resources and a preamble itself, and a combination of different on-demand signaling. FIG .5(b) is a correspondence between a combination of the random access channel resources and the preamble itself, and one or two functions of random access (RA) and different on-demand signaling; FIG .5(c) is a correspondence between a combination of the random access channel resources and the preamble itself, and the different on-demand signaling as well as their corresponding parameters;
FIG. 6 is a schematic diagram of transmission steps of an on-demand processing method performed in an application scenario of 5G NR in an embodiment of the present invention;
FIG. 7 is a schematic diagram of transmission steps of an on-demand processing method performed in an mMTC or URLLC scenario of 5G NR in an embodiment of the present invention;

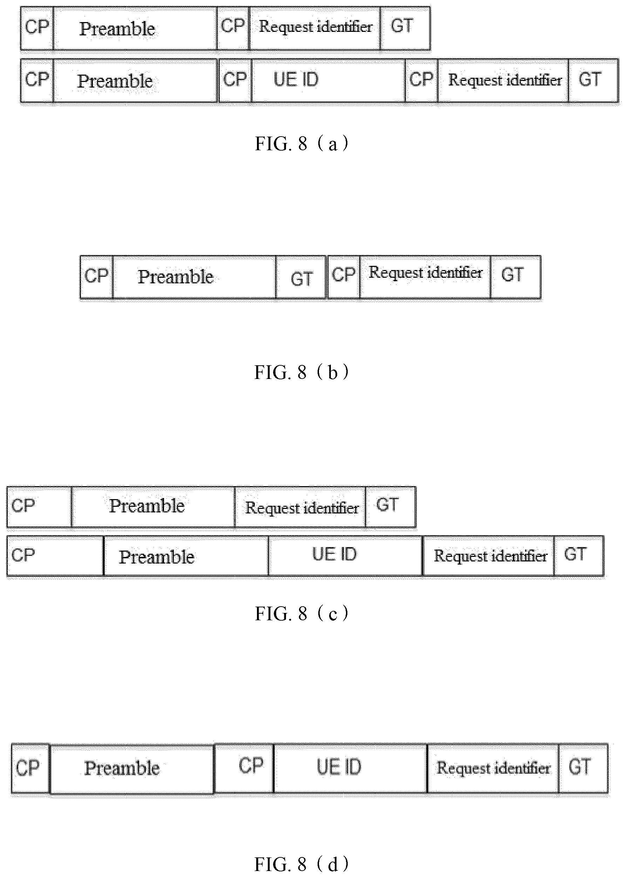

FIG. 8 is a schematic diagram of a message transmission format of an embodiment of the present invention, wherein FIG. 8(a) shows a schematic diagram of setting a cyclic prefix CP between a preamble and/or each part of content, and setting a guard time GT at the end; FIG. 8(b) shows a schematic diagram of setting the CP and the GT separately between the preamble and/or each part of the content; FIG. 8(c) shows a schematic diagram of setting only one CP and GT before and after the entire preamble and all parts of the content; FIG. 8(d) shows a schematic diagram of setting the cyclic prefix CP between the preamble and all parts of the content, and setting the guard time GT at the end;
FIG. 9 shows a schematic diagram of signaling transmission of a UE and a base station in an on-demand processing method of an embodiment of the present invention, wherein in FIG. 9(a) the UE expects to receive an on-demand signaling within the reception time window X, in FIG. 9(b) the UE expects to receive the on-demand signaling within a number of predetermined narrow X cycles;
FIG. 10 is a method of carrying out on-demand processing performed by a base station according to an embodiment of the present invention;
FIG. 11 is a structural block diagram of a UE according to an embodiment of the present invention;
FIG. 12 is a structural block diagram of a base station according to an embodiment of the present invention;
FIG. 13 is an exemplary diagram representing an example of the hardware configuration of a UE and a base station according to an embodiment of the present invention.

### DESCRIPTION OF THE EMBODIMENTS

In order to make objects, technical solutions and advantages of the present invention more apparent, exemplary embodiments according to the present invention will be described in detail below with reference to the drawings. All other embodiments obtained by those skilled in the art based on the embodiments of the present invention described in the present invention without creative labor shall fall within the protection scope of the present invention.

In the 5G NR scenario, for a UE in the aforementioned idle state and inactive state, the inventor of the present application considers a requirement for system energy saving and for reducing network interference caused by always-on signaling as much as possible, thereby hoping that part of the signaling is transmitted by converting the signaling from a form of always-on to a form of on-demand signaling according to a UE request, in order to achieve the purpose of reducing energy consumption and avoiding interference. The on-demand signaling of the embodiments of the present invention may include, but is not limited to, system information for intra-frequency measurement, inter-frequency measurement, inter-RAT measurement, cell reselection, or the like (e.g., similar to SIB3-SIB8 in an LTE system), and a measurement reference signal (MRS) for mobility, and so on.

Thus it can be seen that, in the above scenario, the UE is required to trigger the base station through a certain triggering manner to transmit corresponding on-demand signaling to carry out the on-demand processing, and the embodiments of the present invention provide a method for carrying out the on-demand processing performed by the user equipment and the base station. The method is used to trigger an on-demand signaling transmission of the base station with information interaction between the user equipment and the base station.

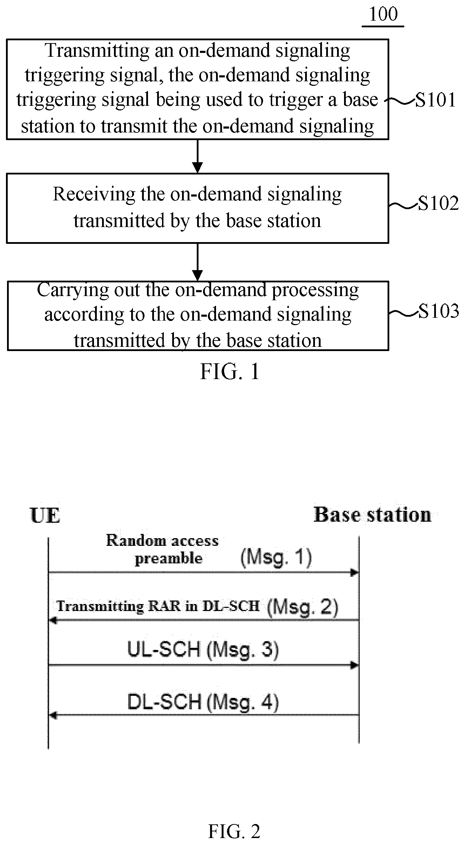

FIG. 1 shows a method of carrying out on-demand processing performed by a UE according to an embodiment of the present invention. Through this method, the UE can trigger an on-demand signaling transmission of a base station to carry out on-demand processing, by transmitting an on-demand signaling trigger signal.

As shown in FIG. 1, in step S101, the UE transmits to the base station the on-demand signaling trigger signal which is used to trigger the base station to transmit the on-demand signaling.

In the embodiment of the present invention, preferably, the UE may be a UE in an idle state or an inactive state. In this step, the on-demand signaling trigger signal transmitted by the UE to the base station may be transmitted in various forms. For example, the UE may transmit the on-demand signaling trigger signal through an uplink control channel (including a random access channel) or an uplink shared channel or the like, and furthermore, the UE may also transmit the on-demand signaling trigger signal in an uplink reference signal. The manner in which the UE transmits the on-demand signaling trigger signal may be explicit or implicit. Taking the random access channel (RACH) as an example, the UE may explicitly or implicitly transmit the on-demand signaling trigger signal through an Msg.1 in the random access channel.

FIG. 2 to FIG. 4 show a scenario in which the UE in the idle state or the inactive state carries out random access. For example, in a competitive random access procedure of legacy LTE, the following four steps as shown in FIG. 2 may be included: (1) the UE transmits a random access preamble (RA preamble) of the random access procedure to the base station in the Msg.1; (2) the base station transmits a random access response (RAR) in an Msg.2 through a DL-SCH to inform the UE of information of available uplink resources; (3) the UE transmits an Msg.3 including a unique identifier of the UE in uplink resources UL-SCH specified by the random access response message after having received the random access response; (4) the base station transmits an Msg.4 to a terminal through the DL-SCH for collision resolution. In addition, in a non-competitive random access procedure of the legacy LTE, only the first two steps in FIG. 2 may be included, without transmitting and receiving procedures of the Msg.3 and the Msg.4.

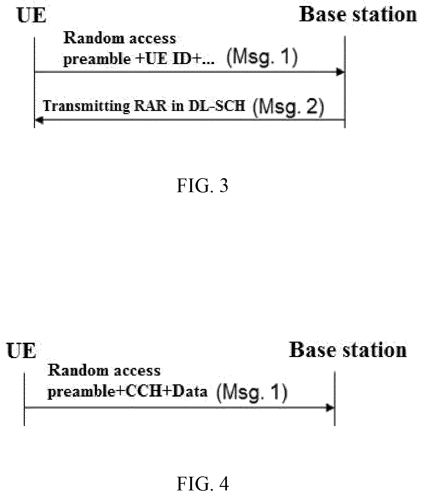

However, in an application scenario of 5G NR, in order to reduce access latency of the UE and to enable small data to be transmitted as soon as possible, a two-step random access procedure shown in FIG. 3 is considered, which specifically includes: (1) the UE transmitting the random access preamble (RA preamble) and a UE ID or further other control information of the random access procedure to the base station in the Msg. 1; (2) the base station transmitting the random access response (RAR) to the UE in the Msg.2, the RAR here may be different from that in a legacy LTE scenario.

In addition, in a grant-free transmission for an mMTC or a URLLC scenario, a one-step random access procedure as shown in FIG. 4 may also be considered, that is, the random access preamble (RA preamble), a control channel (CCH) and data of the random access procedure are transmitted by the UE to the base station in the Msg.1. The CCH may include the UE ID, a buffer state report (BSR), or UE control information or the like. The data transmitted in the Msg.1 may be a very small data packet, for example, data of several or tens of bits, so that the UE can transmit small data packets without the base station allocating resources. In the random access procedure shown in FIG. 4, the base station may feedback the RAR to the UE or may not feedback the RAR to the UE.

In the embodiment of the present invention, for the random access procedure shown in FIG. 2 to FIG. 4, the UE may transmit the on-demand signaling trigger signal through the Msg.1 therein to trigger the base station to transmit the corresponding on-demand signaling. In one embodiment of the present invention, the UE may transmit the on-demand signaling trigger signal to the base station in an implicit manner, for example, the UE may transmit the on-demand signaling trigger signal implicitly according to a predetermined correspondence between random access channel resources (time/frequency/preamble) and the on-demand signaling, and may also transmit the on-demand signaling trigger signal by means of scrambling the on-demand signaling trigger signal. Taking transmitting the on-demand signaling trigger signal implicitly through the predetermined correspondence between the random access channel resources (time/frequency/preamble) and the on-demand signaling as an example, FIG. 5 shows a schematic diagram of the correspondence between the random access channel resources and the on-demand signaling in the embodiment of the present invention. A combination of different time/frequency resources of the RA preamble and the preamble itself in FIG. 5(a) can separately and simultaneously support one or more of the on-demand signaling (SI_x, SI_y, MRS, or the like, where SI_x, SI_y represent different system messages); the combination of different time/frequency resources of the RA preamble and the preamble itself in FIG. 5 (b) can separately and simultaneously support one or two functions of the RA and the on-demand signaling; the combination of different time/frequency resources of the RA preamble and the preamble itself in FIG. 5(c) can also support setting of different periodic parameters (for example, a period, an interval time or the like with which the base station transmits the on-demand signaling). A table of the correspondence between the random access channel resources and the on-demand signaling shown in FIG. 5 is only an example, and in practical applications, it may be a split or a random combination of various on-demand function contents and other functions involved in the above mentioned table, not just the content shown in the table. The foregoing correspondence may be separately stored in advance on the base station side and the UE side, or may be notified by the base station through, for example, always-on MIB and SIB according to practical conditions. The UE may determine a corresponding combination of the time/frequency resources and the preamble of the random access channel according to the on-demand signaling to be triggered through the foregoing correspondence, and transmit a corresponding RA preamble on the time/frequency resources specified in the combination to trigger the base station to transmit the on-demand signaling corresponding to the combination or to implement other corresponding functions.

In another embodiment of the present invention, the UE transmits the on-demand signaling trigger signal to the base station through an explicit manner. For example, the UE explicitly transmits the on-demand signaling trigger signal by means of adding information of a request identifier (Request ID) corresponding to the on-demand signaling to be triggered in the uplink control channel. Preferably, the uplink control channel may be the random access channel, or may be another uplink control channel different from the random access channel. In a similar way, a correspondence between the request identifier and the on-demand signaling may also be predefined. Similar to that shown in FIG. 5, different fields of the request identifier may also support to implement various splits or combinations of, for example, one or more functions in the on-demand signaling (SI_x, SI_y, MRS) in FIG. 5(a); one or two functions in the RA and the on-demand signaling in FIG. 5(b); various functions of setting different periodic parameters or the like in FIG. 5(c) (for example, the period with which the base station transmits the on-demand signaling), and is not described in details here. The foregoing correspondence may be separately stored in advance on the base station side and the UE side, or may be notified by the base station through, for example, always-on MIB and SIB according to practical conditions. The request identifier may be represented by a few bits, of which the number depends on the number of combinations of functions that are desired to be implemented. For example, the number of the bits of the Request ID may be 3 when it is desired to implement 8 combinations of functions; and the number of the bits of the Request ID needs to be 4 when it is desired to implement 12 combinations of functions. Specifically, the Request ID may be 1100 when the UE wishes to implement transmission of SI_x and MRS; and the Request ID may be 1111 when the UE wishes to implement transmission of SI_x, SI_y, and MRS. The UE may add a corresponding Request ID in the uplink control channel, for example, in the random access channel, according to the on-demand signaling to be triggered through the foregoing correspondence, to trigger the base station to transmit the on-demand signaling corresponding to the Request ID or to implement other corresponding functions. Here, since the corresponding random access procedure in FIG. 3 and FIG. 4 can support to add content in the random access channel, the embodiment of the present invention can support to apply to the random access scenarios in FIG. 3 and FIG. 4, with specific manners of application being referred to FIG. 6 and FIG. 7, respectively.

Preferably, in an application of the foregoing embodiment of the present invention in the random access channel, it may not only implement a single selection function or a dual-selection function of the RA and the on-demand signaling triggering through the predefined setting of the Request ID, but may also indicate whether the Msg.1 transmitted by the UE only requests to trigger the on-demand signaling or needs to apply for random access at the same time, by means of adding a random access indicator on the basis of adding the Request ID. For example, a 1-bit random access indicator may be additionally added in the random access channel, where when this random access indicator is 1, it may refer to triggering the corresponding on-demand signaling only according to the Request ID, without applying for random access; and when the random access indicator is 0, it may refer to not only triggering the corresponding on-demand signaling according to the Request ID, but also applying for UE random access. The setting and application of this random access indicator may also be applied to the random access scenarios in FIG. 3 and FIG. 4.

In addition, in another embodiment in which the UE transmits the on-demand signaling trigger signal to the base station through an explicit manner, for legacy LTE four-step random access scenario shown in FIG. 2, the UE may further include corresponding Request ID information in the uplink shared channel of the third step after completing the first two steps, to implement triggering of the corresponding on-demand signaling by the base station. Here, the correspondence between the Request ID and the on-demand signaling may also be predefined, and the specific definition manner is similar to the foregoing. In the embodiment, the number of bits of the Request ID is not strictly limited.

Optionally, in another embodiment of the present invention, triggering of the on-demand signaling may also be implemented with a redefined channel by means of a meaning of the foregoing RA preamble. Specifically, information including the random access preamble and the request identifier (Request ID) corresponding to the on-demand signaling to be triggered, may be transmitted with another uplink control channel different from the random access channel, to trigger the base station to transmit the on-demand signaling. Of course, implicit triggering of the on-demand signaling may also be carried out with different correspondences of the time domain, the frequency domain, and/or the random access preamble. Here, the random access preamble has the same meaning as described above, and the correspondence between the request identifier and the on-demand signaling may also be predefined, and various predefined combinations of functions of the on-demand signaling may also support to implement, for example, one or more functions of the signaling (SI_x, SI_y, MRS, or the like), or may support various splits or combinations of functions with additionally different periodic parameter settings or the like. The foregoing correspondence may be separately stored in advance on the base station side and the UE side, or may be notified by the base station through, for example, the always-on MIB and SIB according to practical conditions. The request identifier may be represented by a few bits, of which the number depends on the number of combinations of functions of the on-demand signaling that are desired to be implemented. The UE may determine the corresponding Request ID according to the on-demand signaling to be triggered through the foregoing correspondence, to trigger the base station to transmit the on-demand signaling corresponding to this Request ID. In the embodiment of the present invention, a message transmitted by the UE does not include information of the UE ID, therefore, the embodiment only implements the on-demand signaling trigger function of the UE to the base station, and does not request the random access, and accordingly, the options of a corresponding combination of functions of the request identifier will not include a random access function, and the base station will not feedback the RAR to the UE.

As described in the foregoing embodiments, when the UE needs to transmit a message including the RA preamble, the UE ID, and/or the Request ID, there may be various different formats for a structure of the transmitted message. FIG. 8 shows a representation form of various formats including the preamble, the UE ID and/or the Request ID, for example, in the format as shown in FIG. 8(a), a cyclic prefix CP may be set between the preamble and/or each part of the content, and a guard time GT is set to the end; in the format as shown in FIG. 8 (b), the CP and GT may be set respectively between the preamble and/or each part of the content; the format as shown in FIG. 8 (c) may set only one CP and GT before and after the entire preamble and all parts of the content, respectively; and the format as shown in FIG. 8(d) may set the cyclic prefix CP between the preamble and all parts of the content, and set the guard time GT at the end, and so on. The above various format settings are only examples, and any different combinations of CP, GT, as well as the preamble and parts of the content may be adopted in practical applications.

The foregoing embodiments are all examples of the random access procedure or a class-like random access message. Furthermore, for the UE in the inactive state, because it can transmit the uplink reference signal, for example, an SRS, the UE may also transmit the information of the request identifier corresponding to the on-demand signaling to be triggered in the uplink reference signal, according to the predefined correspondence between the request identifier (Request ID) and the on-demand signaling. The correspondence between the request identifier and the on-demand signaling may also be predefined, and various predefined combinations of functions of the on-demand signaling functions may also support to implement, for example, one or more functions of the on-demand signaling (SI_x, SI_y, MRS, or the like), or may support various splits or combinations of functions with additionally different periodic parameter settings or the like. The foregoing correspondence may be separately stored in advance on the base station side and the UE side, or may be notified by the base station through, for example, the always-on MIB and SIB according to practical conditions. The request identifier may be represented by a few bits, of which the number depends on the number of combinations of functions that are desired to be implemented. The UE may determine the corresponding Request ID according to the on-demand signaling to be triggered through the foregoing correspondence, and may enable the uplink reference signal to carry this Request ID information to trigger the base station to transmit the on-demand signaling corresponding to this combination. Specifically, the UE may scramble the SRS sequence with the Request ID. Of course, this implementation manner is only an example, and the UE may also adopt any other manner to achieve the purpose of carrying the information of the Request ID.

Returning to FIG. 1, in step S102, the UE receives the on-demand signaling transmitted by the base station.

Specifically, in the random access procedure, when the UE transmits the on-demand signaling trigger signal along with the random access request in the uplink control channel, the base station may transmit the on-demand signaling while feeding back the RAR, and accordingly, the UE will simultaneously receive and process the RAR and the on-demand signaling transmitted by the base station. For another example, whether the UE transmits the on-demand signaling trigger signal along with the random access request in the uplink control channel, or transmits the on-demand signaling trigger signal simultaneously in the Msg.3 in the uplink shared channel, the base station may simultaneously transmit the on-demand signaling along with the Msg.4, while the UE may simultaneously receive and process the Msg.4 and the on-demand signaling replied by the base station.

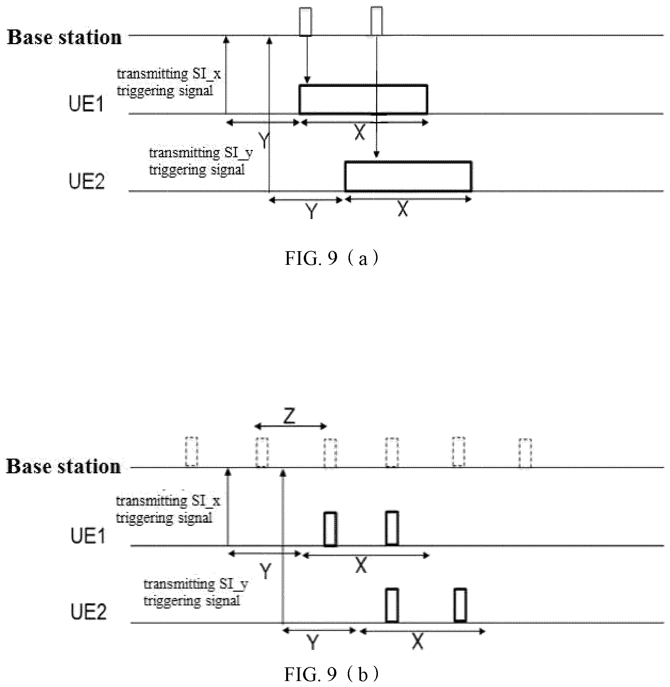

As shown in FIG. 9, after transmitting the on-demand signaling trigger signal, the UE may expect to receive the on-demand signaling transmitted by the base station within an X time window after a Y time period of transmission time (FIG. 9(a)), where the manner in which the base station transmits the on-demand signaling may be one-time or periodic. In addition, in order to reduce the complexity of receiving information by the UE, the UE may also expect to receive the on-demand signaling transmitted by the base station within a number of predefined narrow X time windows (FIG. 9(b)), and these X time windows may be periodically (with period Z) arranged. The foregoing predetermined time period, time window, and period may all be separately stored in advance on the base station side and the UE side, or may be notified by the base station through, for example, the always-on MIB and SIB according to practical conditions.

Preferably, the method of carrying out the on-demand processing shown in FIG. 1 may further include: when the UE fails to successfully receive the on-demand signaling transmitted by the base station within the time window defined above, the UE may further include the following operations: (1) in the random access procedure, the UE fails to successfully receive the on-demand signaling transmitted by the base station. At this time, the UE will first judge whether it is successfully connected to the base station. If the random access procedure of the UE succeeds, the UE may obtain the on-demand signaling previously required by the UE in various manners, without transmitting the on-demand signaling trigger signal again to trigger the base station to transmit the on-demand signaling; if the random access procedure also fails, the UE may repeatedly perform the previous random access request and the on-demand signaling trigger behavior within a certain time or period; (2) the UE only transmits the on-demand signaling trigger signal without an accompanying random access request, and fails to successfully receive the on-demand signaling transmitted by the base station. Then, the UE will repeatedly transmit the foregoing signal within a certain time or period, for example, the UE may repeatedly transmit the information including the Request ID or transmit the SRS message scrambled by the Request ID, in order to successfully receive the on-demand signaling transmitted by the base station. When the UE still fails to receive the on-demand signal after a predetermined time or a predetermined number of times, the UE may attempt to increase a transmitting power of the on-demand signaling trigger signal to continue the transmission, or may suspend the transmission.

In step S103, the UE carries out the on-demand processing according to the on-demand signaling transmitted by the base station. In this step, after the UE successfully receives the on-demand signaling transmitted by the base station, a corresponding on-demand operation and processing may be carried out according to different on-demand signaling types.

The embodiment of the present invention shown in FIG.1 in conjunction with FIGs. 2-9 illustrates a method of triggering the base station to carry out the on-demand signaling transmission by the UE through transmitting the on-demand signaling trigger signal. In another embodiment of the present invention, when the communication system has a change in the demand for reducing interference, it may be predefined whether or not the on-demand signaling needs to be set. Therefore, before transmitting the on-demand signaling trigger signal, the UE may receive an indication of an on-off state of the on-demand signaling transmission by the base station with information of an on-off indicator in the always-on MIB and SIB. The on-off indicator may occupy 1 bit. When the state indicated by the on-off indicator is "on", the UE may trigger the on-demand signaling transmission using the foregoing on-demand processing method; and when the state indicated by the on-off indicator is "off", the UE does not need to trigger the on-demand signaling transmission, and the base station will transmit various on-demand signaling, such as SI_x, SI_y or MRS, within a default preset period.

In addition, in another embodiment of the present invention, when one or more of the on-demand signaling, for example, SI_x, SI_y or MRS, have been triggered by other UEs other than this UE before, the base station will transmit a triggered on-demand signaling in the preset period. Thereby, in consideration of saving system resources, before transmitting the on-demand signaling trigger signal, the UE may first receive, a notification included by the base station in, for example, the always-on MIB and the SIB and used to indicate whether some on-demand signaling has been triggered and will be transmitted within a preset period, thereby judging whether some on-demand signaling needs to be triggered. When the UE receives the notification that a certain on-demand signaling has been triggered and will be transmitted by the base station within a preset period, the on-demand signaling trigger signal corresponding to this on-demand signaling will not be transmitted again within a particular period.

In a multi-beam scenario, the UE may also identify information of a beam and reside on its preferred beam through the always-on MIB and SIB. In this case, when the UE triggers the on-demand signaling transmission, information of its selected preferred beam may be included in the on-demand signaling trigger signal (for example, implicitly indicated in the time/frequency/code resources of the Msg.1, or explicitly indicated in the Request ID), to cause the base station to transmit the on-demand signaling on the beam selected by the UE according to this preferred beam information, rather than transmitting the on-demand signaling on all beams, so as to save the system resources and optimize signaling transmission quality.

It can be seen that the method of carrying out the on-demand processing performed in the communication system provided according to the embodiment of the present invention, can enable part of signaling in the communication system to be transmitted through the user equipment triggering the base station in a form of on-demand signaling, thereby reducing energy consumption of the system, and reducing network interference resulted from always-on signaling in the prior art.

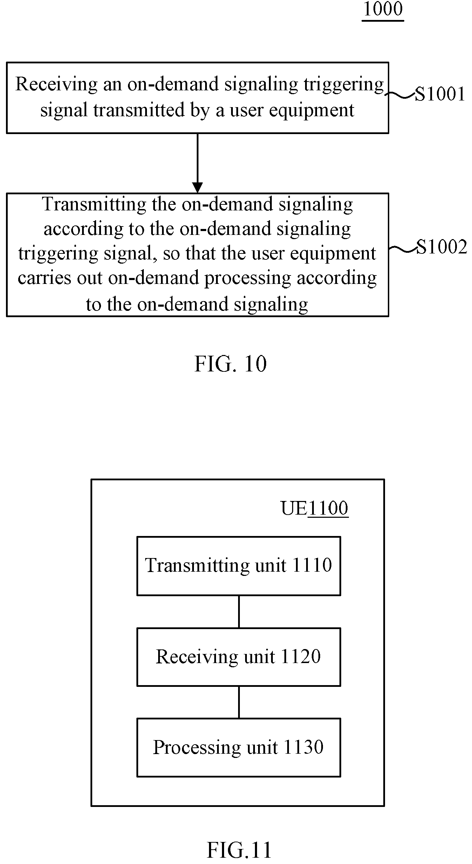

FIG. 10 shows a method of carrying out on-demand processing performed by a base station according to an embodiment of the present invention. Through this method, the base station may trigger an on-demand signaling transmission according to an on-demand signaling trigger signal transmitted by a UE.

As shown in FIG. 10, in step S1001, the base station receives the on-demand signaling trigger signal transmitted by the UE, the on-demand signaling trigger signal being used to trigger the base station to transmit the on-demand signaling.

In the embodiment of the present invention, preferably, the UE may be a UE in an idle state or an inactive state. In this step, the on-demand signaling trigger signal transmitted by the UE and received by the base station may be transmitted in various forms. For example, the UE may transmit the on-demand signaling trigger signal through an uplink control channel (including a random access channel) or an uplink shared channel or the like, and furthermore, the UE may also transmit the on-demand signaling trigger signal in an uplink reference signal. The manner in which the UE transmits the on-demand signaling trigger signal may be explicit or implicit. Taking the random access channel (RACH) as an example, the UE may explicitly or implicitly transmit the on-demand signaling trigger signal through an Msg.1 in the random access channel.

In the embodiment of the present invention, for the random access procedure shown in FIG. 2 to FIG. 4, the base station may receive the on-demand signaling trigger signal transmitted by the UE through an Msg.1 therein. In one embodiment of the present invention, the UE may transmit the on-demand signaling trigger signal to the base station in an implicit manner, for example, the UE may transmit the on-demand signaling trigger signal implicitly according to a predetermined correspondence between random access channel resources (time/frequency/preamble) and the on-demand signaling, and may also transmit the on-demand signaling trigger signal by means of the on-demand signaling trigger signal scrambling. As shown in FIG. 5, the correspondence between the random access channel resources (time/frequency/preamble) and the on-demand signaling may be determined in advance. A table of the correspondence between the random access channel resources and the on-demand signaling shown in FIG. 5 is only an example, and in practical applications, it may be a split or a random combination of various on-demand function contents and other functions involved in the above mentioned table, not just the content shown in the table. The foregoing correspondence may be separately stored in advance on the base station side and the UE side, or may be notified by the base station through, for example, always-on MIB and SIB according to practical conditions. The base station may receive a corresponding combination of the time/frequency resources and the preamble of the random access channel determined and transmitted by the UE according to the on-demand signaling to be triggered through the foregoing correspondence, to transmit the on-demand signaling corresponding to this combination or to implement other corresponding functions.

In another embodiment of the present invention, the UE transmits the on-demand signaling trigger signal to the base station through an explicit manner. For example, the UE explicitly transmits the on-demand signaling trigger signal by means of adding information of a request identifier (Request ID) corresponding to the on-demand signaling to be triggered in the uplink control channel. Preferably, the uplink control channel may be the random access channel, or may be another uplink control channel different from the random access channel. In a similar way, a correspondence between the request identifier and the on-demand signaling may also be predefined. Similar to that shown in FIG. 5, different fields of the request identifier may also support to implement various splits or combinations of, for example, one or more functions in the on-demand signaling (SI_x, SI_y, MRS) in FIG. 5(a); one or two functions in the RA and the on-demand signaling in FIG. 5(b); various functions of setting different periodic parameters or the like in FIG. 5(c) (for example, the period with which the base station transmits the on-demand signaling), and is not described in details here. The foregoing correspondence may be separately stored in advance on the base station side and the UE side, or may be notified by the base station through, for example, the always-on MIB and SIB according to practical conditions. The request identifier may be represented by a few bits, of which the number depends on the number of combinations of functions that are desired to be implemented. For example, the number of the bits of the Request ID may be 3 when it is desired to implement 8 combinations of functions; and the number of the bits of the Request ID needs to be 4 when it is desired to implement 12 combinations of functions. Specifically, the Request ID may be 1100 when the UE wishes to implement transmission of SI_x and MRS; and the Request ID may be 1111 when the UE wishes to implement transmission of SI_x, SI_y, and MRS, and so on. The base station may receive a corresponding Request ID that is added in the uplink control channel, for example, in the random access channel and transmitted by the UE according to the on-demand signaling to be triggered through the foregoing correspondence. Here, since the corresponding random access procedure in FIG. 3 and FIG. 4 can support to add content in the random access channel, the embodiment of the present invention can support to apply to the random access scenarios in FIG. 3 and FIG. 4.

Preferably, in an application of the foregoing embodiment of the present invention in the random access channel, it may not only implement a single selection function or a dual-selection function of the RA and the on-demand signaling triggering through the predefined setting of the Request ID, but may also indicate whether the Msg.1 transmitted by the UE only requests to trigger the on-demand signaling or needs to apply for random access at the same time, by means of adding a random access indicator on the basis of adding the Request ID. For example, in a random access channel, the UE may additionally add a 1-bit random access indicator, where when this random access indicator is 1, the base station may trigger the corresponding on-demand signaling only according to the Request ID, without random access response; and when the random access indicator is 0, the base station will not only trigger the corresponding on-demand signaling according to the Request ID, but also transmit a RAR for the random access response. The setting and application of this random access indicator may also be applied to the random access scenarios in FIG. 3 and FIG. 4.

In addition, in another embodiment in which the UE transmits the on-demand signaling trigger signal to the base station through an explicit manner, for legacy LTE four-step random access scenario shown in FIG. 2, the base station may further receive, in the uplink shared channel of the third step, information including corresponding Request ID transmitted by the UE, after completing the first two steps. Here, the correspondence between the Request ID and the on-demand signaling may also be predefined, and the specific definition manner is similar to the foregoing. In the embodiment, the number of bits of the Request ID is not strictly limited.

Optionally, in another embodiment of the present invention, the UE may further implement triggering of the on-demand signaling with a redefined channel by means of the meaning of the foregoing RA preamble. Specifically, the base station may receive information which includes a random access preamble and a request identifier (Request ID) corresponding to the on-demand signaling to be triggered and is transmitted by the UE with another uplink control channel different from the random access channel. Of course, the base station may also receive implicit triggering of the on-demand signaling by the UE with different correspondences of the time domain, the frequency domain, and/or the random access preamble. Here, the random access preamble has the same meaning as described above, and the correspondence between the request identifier and the on-demand signaling may also be predefined, and various predefined combinations of functions of the on-demand signaling may also support to implement, for example, one or more functions of the signaling (SI_x, SI_y, MRS, or the like) or may support various splits or combinations of functions with additionally different periodic parameter settings or the like. The foregoing correspondence may be separately stored in advance on the base station side and the UE side, or may be notified by the base station through, for example, the always-on MIB and SIB according to practical conditions. The request identifier may be represented by a few bits, of which the number depends on the number of combinations of functions of the on-demand signaling that are desired to be implemented. The UE may determine the corresponding Request ID according to the on-demand signaling to be triggered through the foregoing correspondence, to trigger the base station to transmit the on-demand signaling corresponding to this Request ID. In the embodiment of the present invention, a message transmitted by the UE does not include information of the UE ID, therefore, the embodiment only implements the on-demand signaling trigger function of the UE to the base station, and does not carry out the random access of the UE, and accordingly, the options of a corresponding combination of functions of the request identifier will not include a random access function, and the base station will not feedback the RAR to the UE.

The foregoing embodiments are all examples of the random access procedure or a class-like random access message. Furthermore, for the UE in the inactive state, because it can transmit the uplink reference signal, for example, an SRS, the base station nay also receive the information of the request identifier corresponding to the on-demand signaling to be triggered which is transmitted by the UE in the uplink reference signal according to the predefined correspondence between the request identifier (Request ID) and the on-demand signaling. The correspondence between the request identifier and the on-demand signaling may also be predefined, and various predefined combinations of functions of the on-demand signaling functions may also support to implement, for example, one or more functions of the on-demand signaling (SI_x, SI_y, MRS, or the like), or may support various splits or combinations of functions with additionally different periodic parameter settings or the like. The foregoing correspondence may be separately stored in advance on the base station side and the UE side, or may be notified by the base station through, for example, the always-on MIB and SIB according to practical conditions. The request identifier may be represented by a few bits, of which the number depends on the number of combinations of functions that are desired to be implemented. The UE may determine the corresponding Request ID according to the on-demand signaling to be triggered through the foregoing correspondence, and may enable the uplink reference signal to carry this Request ID information to trigger the base station to transmit the on-demand signaling corresponding to this combination. Specifically, the UE may scramble the SRS sequence with the Request ID. Of course, this implementation manner is only an example, and the UE may also adopt any other manner to achieve the purpose of carrying the information of the Request ID.

Returning to FIG. 10, in step S1002, the base station transmits the on-demand signaling according to the on-demand signaling trigger signal, so that the user equipment carries out the on-demand processing according to the on-demand signaling.

Specifically, in the random access procedure, when the UE transmits the on-demand signaling trigger signal along with the random access request in the uplink control channel, the base station may transmit the on-demand signaling while feeding back the RAR, and accordingly, the UE will simultaneously receive and process the RAR and the on-demand signaling transmitted by the base station. For another example, whether the UE transmits the on-demand signaling trigger signal along with the random access request in the uplink control channel, or transmits the on-demand signaling trigger signal simultaneously in the Msg.3 in the uplink shared channel, the base station may simultaneously transmit the on-demand signaling along with the Msg.4, while the UE may simultaneously receive and process the Msg.4 and the on-demand signaling replied by the base station.

As shown in FIG. 9 above, the base station may transmit the on-demand signaling within a preset time period, so that the UE expects to receive, after transmitting the on-demand signaling trigger signal, the on-demand signaling transmitted by the base station within an X time window after a Y time period of transmission time (FIG. 9(a)), where the manner in which the base station transmits the on-demand signaling may be one-time or periodic (with period Z). In addition, in order to reduce the complexity of receiving information by the UE, the base station may also transmit the on-demand signaling within a number of predefined X time windows, so that the UE expects to receive the on-demand signaling transmitted by the base station within a number of same predefined narrow X time windows (FIG. 9(b)), and these X time windows may be periodically (Z) arranged. The foregoing predetermined time period, time window, and period may all be separately stored in advance on the base station side and the UE side, or may be notified by the base station through, for example, the always-on MIB and SIB according to practical conditions.

Preferably, when the communication system has a change in the demand for reducing interference, the base station may predefine whether or not the on-demand signaling needs to be set. Therefore, the base station may indicate the on-off state of the on-demand signaling transmission with information of the on-off indicator in the MIB and SIB of always-on. The on-off indicator may occupy 1 bit. Before the UE transmits the on-demand signaling trigger signal, when the state indicated by the received on-off indicator is "on", the on-demand signaling transmission may be triggered with the foregoing method of on-demand processing; and when the state indicated by the on-off indicator is "off", the UE does not need to trigger the on-demand signaling transmission, and the base station will transmit various on-demand signaling, such as SI_x, SI_y or MRS, within a default preset period.

In addition, in another embodiment of the present invention, when one or more of the on-demand signaling, for example, SI_x, SI_y or MRS, have been triggered by other UEs other than this UE before, the base station will transmit a triggered on-demand signaling in the preset period. Thereby, in consideration of saving system resources, the base station may include in, for example, the always-on MIB and SIB , a notification used to indicate whether some on-demand signaling has been triggered and will be transmitted within a preset period. Before transmitting the on-demand signaling trigger signal, the UE may first receive the notification transmitted by the base station, thereby judging whether some on-demand signaling needs to be triggered. When the UE receives the notification that a certain on-demand signaling has been triggered and will be transmitted by the base station within a preset period, the on-demand signaling trigger signal corresponding to this on-demand signaling will not be transmitted again within a particular period.

In a multi-beam scenario, the UE may also identify information of a beam and reside on its preferred beam through the always-on MIB and SIB. In this case, when the UE carries out the on-demand processing method, information of its selected preferred beam may be included in the on-demand signaling trigger signal (for example, in the Request ID), and the base station will transmit the on-demand signaling on the beam selected by the UE according to this preferred beam information, rather than transmitting the on-demand signaling on all beams, so as to save the system resources and optimize signaling transmission quality.

It can be seen that the method of carrying out the on-demand processing performed in the communication system provided according to the embodiment of the present invention, can enable part of signaling in the communication system to be transmitted through the user equipment triggering the base station in a form of on-demand signaling, thereby reducing energy consumption of the system, and reducing network interference resulted from always-on signaling in the prior art.

A UE according to an embodiment of the present invention is described below with reference to FIG. 11. The UE may perform the above-described method of carrying out on-demand processing. Since operations of the UE are substantially the same as respective steps of the above-described method of carrying out on-demand processing, only a brief description thereof will be made herein, and a repeated description of the same content will be omitted.

As shown in FIG. 11, a UE 1100 includes a transmitting unit 1110, a receiving unit 1120, and a processing unit 1130. It will be appreciated that FIG. 11 shows only components related to embodiments of the present invention, while other components are omitted, but this is merely illustrative, and the UE 1100 may include other components as needed.

The transmitting unit 1110 transmits an on-demand signaling trigger signal to a base station, the on-demand signaling trigger signal being used to trigger the base station to transmit an on-demand signaling.

In the embodiment of the present invention, preferably, the UE may be a UE in an idle state or an inactive state. The on-demand signaling trigger signal transmitted by the transmitting unit 1110 to the base station may be transmitted in various forms. For example, the transmitting unit 1110 may transmit the on-demand signaling trigger signal through an uplink control channel (including a random access channel) or an uplink shared channel or the like, and furthermore, the transmitting unit 1110 may also transmit the on-demand signaling trigger signal in an uplink reference signal. The manner in which the transmitting unit 1110 transmits the on-demand signaling trigger signal may be explicit or implicit. Taking the random access channel (RACH) as an example, the transmitting unit 1110 may explicitly or implicitly transmit the on-demand signaling trigger signal through an Msg.1 in the random access channel.

In the embodiment of the present invention, for the random access procedure shown in FIG. 2 to FIG. 4, the transmitting unit 1110 may transmit the on-demand signaling trigger signal through the Msg.1 therein to trigger the base station to transmit the corresponding on-demand signaling. In one embodiment of the present invention, the transmitting unit 1110 may transmit the on-demand signaling trigger signal to the base station in an implicit manner, for example, the transmitting unit 1110 may transmit the on-demand signaling trigger signal implicitly according to a predetermined correspondence between random access channel resources (time/frequency/preamble) and the on-demand signaling, and may also transmit the on-demand signaling trigger signal by means of the on-demand signaling trigger signal scrambling. Taking transmitting the on-demand signaling trigger signal implicitly through the predetermined correspondence between the random access channel resources (time/frequency/preamble) and the on-demand signaling as an example, FIG. 5 shows a schematic diagram of the correspondence between the random access channel resources and the on-demand signaling in the embodiment of the present invention. A combination of different time/frequency resources of the RA preamble and the preamble itself in FIG. 5(a) can separately and simultaneously support one or more of the on-demand signaling (SI_x, SI_y, MRS, or the like, where SI_x, SI_y represent different system messages); the combination of different time/frequency resources of the RA preamble and the preamble itself in FIG. 5 (b) can separately and simultaneously support one or two functions of the RA and the on-demand signaling; the combination of different time/frequency resources of the RA preamble and the preamble itself in FIG. 5(c) can also support setting of different periodic parameters (for example, a period with which the base station transmits the on-demand signaling). A table of the correspondence between the random access channel resources and the on-demand signaling shown in FIG. 5 is only an example, and in practical applications, it may be a split or a random combination of various on-demand function contents and other functions involved in the above mentioned table, not just the content shown in the table. The foregoing correspondence may be separately stored in advance on the base station side and the UE side, or may be notified by the base station through, for example, always-on MIB and SIB according to practical conditions. The transmitting unit 1110 may determine a corresponding combination of the time/frequency resources and the preamble of the random access channel according to the on-demand signaling to be triggered through the foregoing correspondence, and transmit a corresponding RA preamble on the time/frequency resources specified in the combination to trigger the base station to transmit the on-demand signaling corresponding to the combination or to implement other corresponding functions.

In another embodiment of the present invention, the transmitting unit 1110 transmits the on-demand signaling trigger signal to the base station through an explicit manner. For example, the transmitting unit 1110 explicitly transmits the on-demand signaling trigger signal by means of adding information of a request identifier (Request ID) corresponding to the on-demand signaling to be triggered in the uplink control channel. Preferably, the uplink control channel may be the random access channel, or may be another uplink control channel different from the random access channel. In a similar way, a correspondence between the request identifier and the on-demand signaling may also be predefined. Similar to that shown in FIG. 5, different fields of the request identifier may also support to implement various splits or combinations of, for example, one or more functions in the on-demand signaling (SI_x, SI_y, MRS) in FIG. 5(a); one or two functions in the RA and the on-demand signaling in FIG. 5(b); various functions of setting different periodic parameters or the like in FIG. 5(c) (for example, the period with which the base station transmits the on-demand signaling), and is not described in details here. The foregoing correspondence may be separately stored in advance on the base station side and the UE side, or may be notified by the base station through, for example, the always-on MIB and SIB according to practical conditions. The request identifier may be represented by a few bits, of which the number depends on the number of combinations of functions that are desired to be implemented. For example, the number of the bits of the Request ID may be 3 when it is desired to implement 8 combinations of functions; and the number of the bits of the Request ID needs to be 4 when it is desired to implement 12 combinations of functions. Specifically, the Request ID may be 1100 when wishing to implement transmission of SI_x and MRS; and the Request ID may be 1111 when wishing to implement transmission of SI_x, SI_y, and MRS. The transmitting unit 1110 may add a corresponding Request ID in the uplink control channel, for example, in the random access channel, according to the on-demand signaling to be triggered through the foregoing correspondence, to trigger the base station to transmit the on-demand signaling corresponding to the Request ID or to implement other corresponding functions. Here, since the corresponding random access procedure in FIG. 3 and FIG. 4 can support to add content in the random access channel, the embodiment of the present invention can support to apply to the random access scenarios in FIG. 3 and FIG. 4.

Preferably, in an application of the foregoing embodiment of the present invention in the random access channel, the transmitting unit 1110 may not only implement a single selection function or a dual-selection function of the RA and the on-demand signaling triggering through the predefined setting of the Request ID, but may also indicate whether the transmitted Msg.1 only requests to trigger the on-demand signaling or needs to apply for random access at the same time, by means of adding a random access indicator on the basis of adding the Request ID. For example, a 1-bit random access indicator may be additionally added in the random access channel, where when this random access indicator is 1, it may refer to triggering the corresponding on-demand signaling only according to the Request ID, without applying for random access; and when the random access indicator is 0, it may refer to not only triggering the corresponding on-demand signaling according to the Request ID, but also applying for UE random access. The setting and application of this random access indicator may also be applied to the random access scenarios in FIG. 3 and FIG. 4.

In addition, in another embodiment in which the transmitting unit 1110 transmits the on-demand signaling trigger signal to the base station through an explicit manner, for legacy LTE four-step random access scenario shown in FIG. 2, the transmitting unit 1110 may further include corresponding Request ID information in the uplink shared channel of the third step after completing the first two steps, to implement triggering of the corresponding on-demand signaling by the base station. Here, the correspondence between the Request ID and the on-demand signaling may also be predefined, and the specific definition manner is similar to the foregoing. In the embodiment, the number of bits of the Request ID is not strictly limited.

Optionally, in another embodiment of the present invention, triggering of the on-demand signaling may also be implemented with a redefined channel by means of a meaning of the foregoing RA preamble. Specifically, information including the random access preamble and the request identifier (Request ID) corresponding to the on-demand signaling to be triggered, may be transmitted by the transmitting unit 1110 with another uplink control channel different from the random access channel, to trigger the base station to transmit the on-demand signaling. Of course, implicit triggering of the on-demand signaling may also be carried out by the transmitting unit 1110 with different correspondences of the time domain, the frequency domain, and/or the random access preamble, or through scrambling of the Request ID. Here, the random access preamble has the same meaning as described above, and the correspondence between the request identifier and the on-demand signaling may also be predefined, and various predefined combinations of functions of the on-demand signaling may also support to implement, for example, one or more functions of the signaling (SI_x, SI_y, MRS, or the like), or may support various splits or combinations of functions with additionally different periodic parameter settings or the like. The foregoing correspondence may be separately stored in advance on the base station side and the UE side, or may be notified by the base station through, for example, the always-on MIB and SIB according to practical conditions. The request identifier may be represented by a few bits, of which the number depends on the number of combinations of functions of the on-demand signaling that are desired to be implemented. The transmitting unit 1110 may determine the corresponding Request ID according to the on-demand signaling to be triggered through the foregoing correspondence, to trigger the base station to transmit the on-demand signaling corresponding to this Request ID. In the embodiment of the present invention, a message transmitted by the transmitting unit 1110 does not include information of the UE ID, therefore, the embodiment only implements the on-demand signaling trigger function of the transmitting unit 1110 of the UE to the base station, and does not request the random access, and accordingly, the options of a corresponding combination of functions of the request identifier will not include a random access function, and the base station will not feedback the RAR to the UE.

The embodiments are all examples of the random access procedure or a class-like random access message. Furthermore, for the UE in the inactive state, because it can transmit the uplink reference signal, for example, an SRS, the transmitting unit 1110 may also transmit the information of the request identifier corresponding to the on-demand signaling to be triggered in the uplink reference signal according to the predefined correspondence between the request identifier (Request ID) and the on-demand signaling. The correspondence between the request identifier and the on-demand signaling may also be predefined, and various predefined combinations of functions of the on-demand signaling functions may also support to implement, for example, one or more functions of the on-demand signaling (SI_x, SI_y, MRS, or the like), or may support various splits or combinations of functions with additionally different periodic parameter settings or the like. The foregoing correspondence may be separately stored in advance on the base station side and the UE side, or may be notified by the base station through, for example, the always-on MIB and SIB according to practical conditions. The request identifier may be represented by a few bits, of which the number depends on the number of combinations of functions that are desired to be implemented. The transmitting unit 1110 may determine the corresponding Request ID according to the on-demand signaling to be triggered through the foregoing correspondence, and may enable the uplink reference signal to carry this Request ID information to trigger the base station to transmit the on-demand signaling corresponding to this combination. Specifically, the transmitting unit 1110 may scramble the SRS sequence with the Request ID. Of course, this implementation manner is only an example, and the UE may also adopt any other manner to achieve the purpose of carrying the information of the Request ID.

The receiving unit 1120 receives the on-demand signaling transmitted by the base station.

Specifically, in the random access procedure, when the transmitting unit 1110 of the UE transmits the on-demand signaling trigger signal along with the random access request in the uplink control channel, the base station may transmit the on-demand signaling while feeding back the RAR, and accordingly, the receiving unit 1120 of the UE will simultaneously receive and process the RAR and the on-demand signaling transmitted by the base station. For another example, whether the transmitting unit 1110 of the UE transmits the on-demand signaling trigger signal along with the random access request in the uplink control channel, or transmits the on-demand signaling trigger signal simultaneously in the Msg.3 in the uplink shared channel, the base station may simultaneously transmit the on-demand signaling along with the Msg.4, while the receiving unit 1120 of the UE may simultaneously receive and process the Msg.4 and the on-demand signaling replied by the base station.

After transmitting the on-demand signaling trigger signal, the receiving unit 1120 may expect to receive the on-demand signaling transmitted by the base station within an X time window after a Y time period of transmission time, and the manner in which the base station transmits the on-demand signaling may be one-time or periodic (with period Z). In addition, in order to reduce the complexity of receiving information by the UE, the receiving unit 1120 may also expect to receive the on-demand signaling transmitted by the base station within a number of predefined narrow X time windows, and these X time windows may be periodically (Z) arranged. The foregoing predetermined time period, time window, and period may all be separately stored in advance on the base station side and the UE side, or may be notified by the base station through, for example, the always-on MIB and SIB according to practical conditions.

Preferably, when the UE fails to successfully receive the on-demand signaling transmitted by the base station within the time window defined above, the UE shown in FIG. 11 may also be configured as: (1) in the random access procedure, the UE fails to successfully receive the on-demand signaling transmitted by the base station. At this time, the UE will first judge whether it is successfully connected to the base station. If the random access procedure of the UE succeeds, the UE may obtain the on-demand signaling previously required by the UE in various manners, without transmitting the on-demand signaling trigger signal again to trigger the base station to transmit the on-demand signaling; if the random access procedure also fails, the UE may repeatedly perform the previous random access request and the on-demand signaling trigger behavior within a certain time or period; (2) the UE only transmits the on-demand signaling trigger signal without an accompanying random access request, and fails to successfully receive the on-demand signaling transmitted by the base station. Then, the UE will repeatedly transmit the foregoing signal within a certain time or period, for example, the UE may repeatedly transmit the information including the Request ID or transmit the SRS message scrambled by the Request ID, in order to successfully receive the on-demand signaling transmitted by the base station. When the UE still fails to receive the on-demand signal after a predetermined time or a predetermined number of times, the UE may attempt to increase a transmitting power of the on-demand signaling trigger signal to continue the transmission, or may suspend the transmission.

The processing unit 1130 carries out the on-demand processing according to the on-demand signaling transmitted by the base station. After the UE successfully receives the on-demand signaling transmitted by the base station, a corresponding on-demand operation and processing may be carried out according to different on-demand signaling types.

In another embodiment of the present invention, when the communication system has a change in the demand for reducing interference, it may be predefined whether or not the on-demand signaling needs to be set. Therefore, before the transmitting unit 1110 of the UE transmits the on-demand signaling trigger signal, the UE may further include a judging unit (not shown) configured to receive and judge an indication of an on-off state of the on-demand signaling transmission by the base station with information of an on-off indicator in the always-on MIB and SIB. The on-off indicator may occupy 1 bit. When the state indicated by the on-off indicator is "on", the judging unit may judge that the transmitting unit 1110 can transmit the on-demand signaling; and when the state indicated by the on-off indicator is "off", the judging unit may judge that the transmitting unit 1110 does not need to transmit the on-demand signaling, and the base station will transmit various on-demand signaling, such as SI_x, SI_y or MRS, within a default preset period.

In addition, in another embodiment of the present invention, when one or more of the on-demand signaling, for example, SI_x, SI_y or MRS, have been triggered by other UEs other than this UE before, the base station will transmit a triggered on-demand signaling in the preset period. Thereby, in consideration of saving system resources, before the UE transmits the on-demand signaling trigger signal, the judging unit may first receive and judge whether there exists a notification included by the base station in, for example, the always-on MIB and the SIB and used to indicate whether some on-demand signaling has been triggered and will be transmitted within a preset period, thereby judging whether some on-demand signaling needs to be triggered. When the UE receives the notification that a certain on-demand signaling has been triggered and will be transmitted by the base station within a preset period, the judging unit may judge that the transmitting unit 1110 does not need to transmit the on-demand signaling trigger signal corresponding to this on-demand signaling again within a particular period.

In a multi-beam scenario, the UE may also identify information of a beam and reside on its preferred beam through the always-on MIB and SIB. In this case, when the transmitting unit 1110 triggers the on-demand signaling transmission, information of its selected preferred beam may be included in the on-demand signaling trigger signal (for example, in the Request ID), to cause the base station to transmit the on-demand signaling on the beam selected by the UE according to this preferred beam information, rather than transmitting the on-demand signaling on all beams, so as to save the system resources and optimize signaling transmission quality.

It can be seen that the UE in the communication system provided according to the embodiment of the present invention, can enable part of signaling in the communication system to be transmitted through the user equipment triggering the base station in a form of on-demand signaling, thereby reducing energy consumption of the system, and reducing network interference resulted from always-on signaling in the prior art.

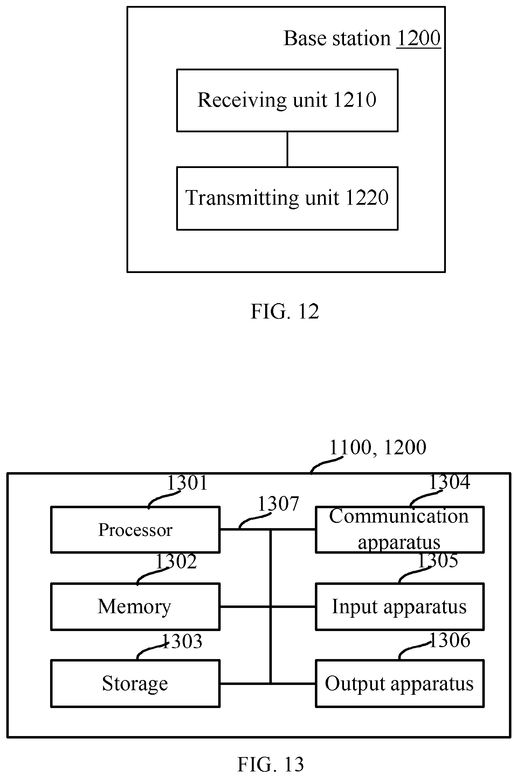

A base station according to an embodiment of the present invention is described below with reference to FIG. 12. The base station may perform the above-described method of carrying out on-demand processing. Since the operations of the base station are substantially the same as respective steps of the above-described method of carrying out on-demand processing, only a brief description thereof will be made herein, and a repeated description of the same content will be omitted.

As shown in FIG. 12, the base station 1200 includes a receiving unit 1210 and a transmitting unit 1220. It will be appreciated that FIG. 12 shows only components related to embodiments of the present invention, while other components are omitted, but this is merely illustrative, and base station 1200 may include other components as needed.

The receiving unit 1210 receives an on-demand signaling trigger signal transmitted by a user equipment, the on-demand signaling trigger signal being used to trigger the base station to transmit an on-demand signaling.

In the embodiment of the present invention, preferably, the UE may be a UE in an idle state or an inactive state. The on-demand signaling trigger signal transmitted by the UE and received by the receiving unit 1210 may be transmitted in various forms. For example, the UE may transmit the on-demand signaling trigger signal through an uplink control channel (including a random access channel) or an uplink shared channel or the like, and furthermore, the UE may also transmit the on-demand signaling trigger signal in an uplink reference signal. The manner in which the UE transmits the on-demand signaling trigger signal may be explicit or implicit. Taking the random access channel (RACH) as an example, the UE may explicitly or implicitly transmit the on-demand signaling trigger signal through an Msg.1 in the random access channel.

In the embodiment of the present invention, for the random access procedure shown in FIG. 2 to FIG. 4, the receiving unit 1210 may receive the on-demand signaling trigger signal transmitted by the UE through an Msg.1 therein. In one embodiment of the present invention, the UE may transmit the on-demand signaling trigger signal to the base station in an implicit manner, for example, the UE may transmit the on-demand signaling trigger signal implicitly according to a predetermined correspondence between random access channel resources (time/frequency/preamble) and the on-demand signaling, and may also transmit the on-demand signaling trigger signal by means of the on-demand signaling trigger signal scrambling. As shown in FIG. 5, the correspondence between the random access channel resources (time/frequency/preamble) and the on-demand signaling may be determined in advance. A table of the correspondence between the random access channel resources and the on-demand signaling shown in FIG. 5 is only an example, and in practical applications, it may be a split or a random combination of various on-demand function contents and other functions involved in the above mentioned table, not just the content shown in the table. The foregoing correspondence may be separately stored in advance on the base station side and the UE side, or may be notified by the base station through, for example, always-on MIB and SIB according to practical conditions. The base station may receive a corresponding combination of the time/frequency resources and the preamble of the random access channel determined and transmitted by the UE according to the on-demand signaling to be triggered through the foregoing correspondence, to transmit the on-demand signaling corresponding to this combination or to implement other corresponding functions.

In another embodiment of the present invention, the UE transmits the on-demand signaling trigger signal to the base station through an explicit manner. For example, the UE explicitly transmits the on-demand signaling trigger signal by means of adding information of a request identifier (Request ID) corresponding to the on-demand signaling to be triggered in the uplink control channel. Preferably, the uplink control channel may be the random access channel, or may be another uplink control channel different from the random access channel. In a similar way, a correspondence between the request identifier and the on-demand signaling may also be predefined. Similar to that shown in FIG. 5, different fields of the request identifier may also support to implement various splits or combinations of, for example, one or more functions in the on-demand signaling (SI_x, SI_y, MRS) in FIG. 5(a); one or two functions in the RA and the on-demand signaling in FIG. 5(b); various of functions of setting different periodic parameters or the like in FIG. 5(c) (for example, the period with which the base station transmits the on-demand signaling), and is not described in details here. The foregoing correspondence may be separately stored in advance on the base station side and the UE side, or may be notified by the base station through, for example, the always-on MIB and SIB according to practical conditions. The request identifier may be represented by a few bits, of which the number depends on the number of combinations of functions that are desired to be implemented. For example, the number of the bits of the Request ID may be 3 when it is desired to implement 8 combinations of functions; and the number of the bits of the Request ID needs to be 4 when it is desired to implement 12 combinations of functions. Specifically, the Request ID may be 1100 when the UE wishes to implement transmission of SI_x and MRS; and the Request ID may be 1111 when the UE wishes to implement transmission of SI_x, SI_y, and MRS, and so on. The receiving unit 1210 may receive a corresponding Request ID that is added in the uplink control channel, for example, in the random access channel and transmitted by the UE according to the on-demand signaling to be triggered through the foregoing correspondence. Here, since the corresponding random access procedure in FIG. 3 and FIG. 4 can support to add content in the random access channel, the embodiment of the present invention can support to apply to the random access scenarios in FIG. 3 and FIG. 4.

Preferably, in an application of the foregoing embodiment of the present invention in the random access channel, it may not only implement a single selection function or a dual-selection function of the RA and the on-demand signaling triggering through the predefined setting of the Request ID, but may also indicate whether the Msg.1 transmitted by the UE only requests to trigger the on-demand signaling or needs to apply for random access at the same time, by means of adding a random access indicator on the basis of adding the Request ID. For example, in a random access channel, the UE may additionally add a 1-bit random access indicator, where when this random access indicator is 1, the base station may trigger the corresponding on-demand signaling only according to the Request ID, without random access response; and when the random access indicator is 0, the base station will not only trigger the corresponding on-demand signaling according to the Request ID, but also transmit a RAR for the random access response. The setting and application of this random access indicator may also be applied to the random access scenarios in FIG. 3 and FIG. 4.

In addition, in another embodiment in which the UE transmits the on-demand signaling trigger signal to the base station through an explicit manner, for legacy LTE four-step random access scenario shown in FIG. 2, the receiving unit 1210 may further receive, in the uplink shared channel of the third step, information including corresponding Request ID transmitted by the UE, after completing the first two steps. Here, the correspondence between the Request ID and the on-demand signaling may also be predefined, and the specific definition manner is similar to the foregoing. In the embodiment, the number of bits of the Request ID is not strictly limited.

Optionally, in another embodiment of the present invention, the UE may further implement triggering of the on-demand signaling with a redefined channel by means of the meaning of the foregoing RA preamble. Specifically, the receiving unit 1210 may receive information which includes a random access preamble and a request identifier (Request ID) corresponding to the on-demand signaling to be triggered and is transmitted by the UE with another uplink control channel different from the random access channel. Of course, the receiving unit 1210 may also receive implicit triggering of the on-demand signaling by the UE with different correspondences of the time domain, the frequency domain, and/or the random access preamble. Here, the random access preamble has the same meaning as described above, and the correspondence between the request identifier and the on-demand signaling may also be predefined, and various predefined combinations of functions of the on-demand signaling may also support to implement, for example, one or more functions of the signaling (SI_x, SI_y, MRS, or the like) or may support various splits or combinations of functions with additionally different periodic parameter settings or the like. The foregoing correspondence may be separately stored in advance on the base station side and the UE side, or may be notified by the base station through, for example, the always-on MIB and SIB according to practical conditions. The request identifier may be represented by a few bits, of which the number depends on the number of combinations of functions of the on-demand signaling that are desired to be implemented. The UE may determine the corresponding Request ID according to the on-demand signaling to be triggered through the foregoing correspondence, to trigger the base station to transmit the on-demand signaling corresponding to this Request ID. In the embodiment of the present invention, a message transmitted by the UE does not include information of the UE ID, therefore, the embodiment only implements the on-demand signaling trigger function of the UE to the base station, and does not carry out the random access of the UE, and accordingly, the options of a corresponding combination of functions of the request identifier will not include a random access function, and the base station will not feedback the RAR to the UE.

The foregoing embodiments are all examples of the random access procedure or a class-like random access message. Furthermore, for the UE in the inactive state, because it can transmit the uplink reference signal, for example, an SRS, the receiving unit 1210 nay also receive the information of the request identifier corresponding to the on-demand signaling to be triggered which is transmitted by the UE in the uplink reference signal according to the predefined correspondence between the request identifier (Request ID) and the on-demand signaling. The correspondence between the request identifier and the on-demand signaling may also be predefined, and various predefined combinations of functions of the on-demand signaling functions may also support to implement, for example, one or more functions of the on-demand signaling (SI_x, SI_y, MRS, or the like), or may support various splits or combinations of functions with additionally different periodic parameter settings or the like. The foregoing correspondence may be separately stored in advance on the base station side and the UE side, or may be notified by the base station through, for example, the always-on MIB and SIB according to practical conditions. The request identifier may be represented by a few bits, of which the number depends on the number of combinations of functions that are desired to be implemented. The UE may determine the corresponding Request ID according to the on-demand signaling to be triggered through the foregoing correspondence, and may enable the uplink reference signal to carry this Request ID information to trigger the base station to transmit the on-demand signaling corresponding to this combination. Specifically, the UE may scramble the SRS sequence with the Request ID. Of course, this implementation manner is only an example, and the UE may also adopt any other manner to achieve the purpose of carrying the information of the Request ID.

The transmitting unit 1220 transmits the on-demand signaling according to the on-demand signaling trigger signal, so that the user equipment carries out the on-demand processing according to the on-demand signaling.

Specifically, in the random access procedure, when the UE transmits the on-demand signaling trigger signal along with the random access request in the uplink control channel, the transmitting unit 1220 of the base station may transmit the on-demand signaling while feeding back the RAR, and accordingly, the UE will simultaneously receive and process the RAR and the on-demand signaling transmitted by the base station. For another example, whether the UE transmits the on-demand signaling trigger signal along with the random access request in the uplink control channel, or transmits the on-demand signaling trigger signal simultaneously in the Msg.3 in the uplink shared channel, the transmitting unit 1220 of the base station may simultaneously transmit the on-demand signaling along with the Msg.4, while the UE may simultaneously receive and process the Msg.4 and the on-demand signaling replied by the base station.

As shown in FIG. 9 above, the transmitting unit 1220 may transmit the on-demand signaling within a preset time period, so that the UE expects to receive, after transmitting the on-demand signaling trigger signal, the on-demand signaling transmitted by the base station within an X time window after a Y time period of transmission time (FIG. 9(a)), where the manner in which the transmitting unit 1220 transmits the on-demand signaling may be one-time or periodic (with period Z). In addition, in order to reduce the complexity of receiving information by the UE, the transmitting unit 1220 may also transmit the on-demand signaling within a number of predefined X time windows, so that the UE expects to receive the on-demand signaling transmitted by the base station within a number of same predefined narrow X time windows (FIG. 9(b)), and these X time windows may be periodically (Z) arranged. The foregoing predetermined time period, time window, and period may all be separately stored in advance on the base station side and the UE side, or may be notified by the base station through, for example, the always-on MIB and SIB according to practical conditions.

Preferably, when the communication system has a change in the demand for reducing interference, the base station may predefine whether or not the on-demand signaling needs to be set. Therefore, the base station may be configured to indicate the on-off state of the on-demand signaling transmission with information of the on-off indicator in the MIB and SIB of always-on. The on-off indicator may occupy 1 bit. Before the UE transmits the on-demand signaling trigger signal, when the state indicated by the received on-off indicator is "on", the on-demand signaling transmission may be triggered with the foregoing method of on-demand processing; and when the state indicated by the on-off indicator is "off", the UE does not need to trigger the on-demand signaling transmission, and the base station will transmit various on-demand signaling, such as SI_x, SI_y or MRS, within a default preset period.

In addition, in another embodiment of the present invention, when one or more of the on-demand signaling, for example, SI_x, SI_y or MRS, have been triggered by other UEs other than this UE before, the base station will transmit a triggered on-demand signaling in the preset period. Thereby, in consideration of saving system resources, the base station may be configured to include in, for example, the always-on MIB and SIB, a notification used to indicate whether some on-demand signaling has been triggered and will be transmitted within a preset period. Before transmitting the on-demand signaling trigger signal, the UE may first receive the notification transmitted by the base station, thereby judging whether some on-demand signaling needs to be triggered. When the UE receives the notification that a certain on-demand signaling has been triggered and will be transmitted by the base station within a preset period, the on-demand signaling trigger signal corresponding to this on-demand signaling will not be transmitted again within a particular period.

In a multi-beam scenario, the UE may also identify information of a beam and reside on its preferred beam through the always-on MIB and SIB. In this case, when the UE carries out the on-demand processing method, information of its selected preferred beam may be included in the on-demand signaling trigger signal (for example, in the Request ID), and the transmitting unit 1220 of the base station will transmit the on-demand signaling on the beam selected by the UE according to this preferred beam information, rather than transmitting the on-demand signaling on all beams, so as to save the system resources and optimize signaling transmission quality.

It can be seen that the base station in the communication system provided according to the embodiment of the present invention, can enable part of signaling in the communication system to be transmitted through the user equipment triggering the base station in a form of on-demand signaling, thereby reducing energy consumption of the system, and reducing network interference resulted from always-on signaling in the prior art.

Note that the block diagrams that have been used to describe the above embodiments show blocks in functional units. These functional blocks (components) may be implemented in arbitrary combinations of hardware and/or software. Also, the means for implementing each functional block is not particularly limited. That is, each functional block may be realized by one piece of apparatus that is physically and/or logically aggregated, or may be realized by directly and/or indirectly connecting two or more physically and/or logically separate pieces of apparatus (via wire and/or wireless, for example) and using these multiple pieces of apparatus.

For example, the base station, UE and so on according to one embodiment of the present invention may function as a computer that executes the processes of the radio communication method of the present invention. FIG. 13 is a diagram to show an example hardware structure of a UE 1100 and a base station 1200 according to one embodiment of the present invention. Physically, the above-described UE 1100 and base stations 1200 may be formed as a computer apparatus that includes a processor 1301, a memory 1302, a storage 1303, communication apparatus 1304, input apparatus 1305, output apparatus 1306 and a bus 1307.

Note that, in the following description, the word "apparatus" may be replaced by "circuit," "device," "unit" and so on. Note that the hardware structure of the UE 1100 and the base station 1200 may be designed to include one or more of each apparatus, or may be designed not to include part of the apparatus.

Each function of the UE 1100 and the base station 1200 is implemented by reading predetermined software (program) on hardware such as the processor 1301 and the memory 1302, and by controlling the calculations in the processor 1301, the communication in the communication apparatus 1304, and the reading and/or writing of data in the memory 1302 and the storage 1303.

The processor 1301 may control the whole computer by, for example, running an operating system. The processor 1301 may be configured with a central processing unit (CPU), which includes interfaces with peripheral apparatus, control apparatus, computing apparatus, a register and so on.

Furthermore, the processor 1301 reads programs (program codes), software modules or data, from the storage 1303 and/or the communication apparatus 1304, into the memory 1302, and executes various processes according to these. As the programs, the programs that cause the computer to perform at least a part of the operations described in the above embodiments are used. For example, the transmitting unit 401 of the UE 1100 is stored in the storage 1302, and can be realized by control programs that are executed in the processor 1301, and other functional blocks may be realized likewise. The above various processes are described with the subject matter of performing in one processor 1301, however, may also be performed simultaneously or sequentially by two or more processors. The processor 1301 may be realized by more than one chip. It should be noted that the programs can be transmitted from the network via a communication circuit.

The memory 1302 is a computer-readable recording medium, and may be constituted by, for example, at least one of a ROM (Read Only Memory), an EPROM (Erasable Programmable ROM), an EEPROM (Electrically EPROM), a RAM (Random Access Memory) and/or other appropriate storage media. The memory 1302 may be referred to as a "register," a "cache," a "main memory" (primary storage apparatus) and so on. The memory 1302 can store executable programs (program codes), software modules and so on for implementing the radio communication methods according to embodiments of the present invention.

The storage 1303 is a computer-readable recording medium, and may be constituted by, for example, at least one of a flexible disk, a floppy (registered trademark) disk, a magneto-optical disk (for example, a compact disc (CD-ROM (Compact Disc ROM) and so on), a digital versatile disc, a Blu-ray (registered trademark) disk), a removable disk, a hard disk drive, a smart card, a flash memory device (for example, a card, a stick, a key drive, etc.), a magnetic stripe, a database, a server, and/or other appropriate storage media. The storage 1303 may be referred to as "secondary storage apparatus". The above storage medium may be, for example, other suitable media such as databases, servers, or the like, including the storage 1302 and/or the memory 1303.

The communication apparatus 1304 is hardware (a transmitting/receiving device) that carries out communication among the computers via wired and/or wireless networks, and is also referred to as, for example, a network device, a network controller, a network card, a communication module, or the like.

The input apparatus 1305 is an input device for receiving input from the outside (for example, a keyboard, a mouse, a microphone, a switch, a button, a sensor and so on). The output apparatus 1306 is an output device for allowing sending output to the outside (for example, a display, a speaker, an LED (Light Emitting Diode) lamp and so on). Note that the input apparatus 1305 and the output apparatus 1306 may be provided in an integrated structure (for example, a touch panel).

In addition, the respective apparatuses such as the processor 1301 and the storage 1302 are connected by the bus via which information is communicated. The bus 1307 may be composed of a single bus or different buses among apparatuses.

In addition, the UE 1100 and the base station 1200 may be structured to include hardware such as a microprocessor, a digital signal processor (DSP), an ASIC (Application-Specific Integrated Circuit), a PLD (Programmable Logic Device), an FPGA (Field Programmable Gate Array) and so on, and part or all of the functional blocks may be implemented by the hardware. For example, the processor 1301 may be implemented with at least one of these pieces of hardware.

A base station can accommodate one or more (for example, three) cells (also referred to as "sectors"). When a base station accommodates a plurality of cells, the entire coverage area of the base station can be partitioned into multiple smaller areas, and each smaller area can provide communication services through base station subsystems (for example, indoor small base stations (RRHs (Remote Radio Heads))). The term "cell" or "sector" refers to part or all of the coverage area of a base station and/or a base station subsystem that provides communication services within this coverage. In addition, the terms "base station (BS)," "eNB", "cell" and "sector" may be used interchangeably. A base station may be referred to as a "fixed station," "NodeB," "eNodeB (eNB)," "access point," "transmission point," "receiving point," "femto cell," "small cell" and so on.

A UE varies from a person skilled in the art and are sometimes referred to as mobile stations, subscriber stations, mobile units, subscriber units, wireless units, remote units, mobile devices, wireless devices, wireless communication devices, remote devices, mobile subscriber stations, access terminals, mobile terminal, wireless terminal, remote terminal, handheld device, user agent, mobile client, client, or other suitable terms.

Certain actions performed by the base station in the present specification are, in some cases, performed by its upper nodes due to circumstances. In a network composed of one or more network nodes having base stations, it is clear that various operations for communication with terminals can be performed by base stations and/or other network nodes other than base stations (for example, an MME or an S-GW, or the like, but it is not limited to these). Although the above exemplifies the case where the number of the other network nodes other than base stations is one, the other network nodes other than base stations may be a combination of a plurality of other network nodes (for example, the MME and the S-GW).

Reporting of information is by no means limited to the aspects/embodiments described in this specification, and other methods may be used as well. For example, reporting of information may be implemented by using physical layer signaling (for example, downlink control information (DCI), uplink control information (UCI)), higher layer signaling (for example, RRC (Radio Resource Control) signaling, broadcast information (the master information block (MIB), system information blocks (SIBs) and so on), and other signals and/or combinations of these. Information and so on can be output from higher layers to lower layers and/or from lower layers to higher layers. Information and so on may be input and/or output via a plurality of network nodes. The information and so on that are input and /or output may be stored in a specific location (for example, in a memory), or may be managed in a management table. The information and so on to be input and/or output can be overwritten, updated or appended. The information and so on that are output may be deleted. The information and so on that are input may be transmitted to other pieces of apparatus

The aspects/embodiments illustrated in this specification may be applied to systems that use LTE (Long Term Evolution), LTE-A (LTE-Advanced), SUPER 3G, IMT-Advanced, 4G (4th generation mobile communication system), 5G (5th generation mobile communication system), FRA (Future Radio Access), W-CDMA (registered trademark), GSM (registered trademark), CDMA 2000, UMB (Ultra Mobile Broadband), IEEE 802.11 (Wi-Fi), IEEE 802.16 (WiMAX), IEEE 802.20, UWB (Ultra-WideBand), Bluetooth (registered trademark) and other adequate radio communication methods, and/or next-generation systems that are enhanced based on these.

When terms such as "include," "include" and variations of these are used in this specification or in claims, these terms are intended to be inclusive, in a manner similar to the way the term "provide" is used. Furthermore, the term "or" as used in this specification or in claims is intended to be not an exclusive disjunction.

The respective manners/implementations illustrated in the present specification may be used individually or in combination, or may be switched with execution. In addition, the notification of specified information (for example, notification of identification information or the like) is not limited to being performed explicitly, and may also be performed implicitly (for example, without the notification of the specified information).

The present invention has been described in detail above, and the principles and embodiments of the present invention have been described with reference to specific examples. The description of the above embodiments is only for helping to understand the method of the present invention and its core ideas.

## Claims

1. A user equipment (1100) comprising:
a transmitting unit (1110) configured to transmit request information, the request information being used to trigger a base station (1200) to transmit on-demand signaling;
a receiving unit (1120) configured to receive the on-demand signaling transmitted by the base station (1200);
a processing unit (1130) configured to carry out on-demand processing according to the on-demand signaling transmitted by the base station (1200),
**characterized in that** the transmitting unit (1110) is configured to transmit the request information in a random access channel by combining time-frequency domain resources and a random access preamble of corresponding random access channel, according to a correspondence between at least one of time-frequency domain resources and random access preamble of the random access channel and on-demand signaling.

2. The user equipment (1100) of claim 1, wherein
the transmitting unit (1110) is configured to transmit the request information through Msg. 1.

3. The user equipment (1100) of claim 1, wherein
the receiving unit (1120) is configured to receive the on-demand signaling within a predefined time window.

4. The user equipment (1100) of claim 3, wherein
if the receiving unit (1120) fails to receive the on-demand signaling within one time window, then receives the on-demand signaling within next time window.

5. The user equipment (1100) of claim 1, wherein
the receiving unit (1120) is further configured to receive information of indicator before the transmitting unit (1110) transmits the request information; and
the processing unit (1130) is further configured to determine, according to the information of indicator, whether to receive the on-demand signaling by transmitting the request information.

6. A method performed by a user equipment (1100), the method comprising:
transmitting (S101) request information, the request information being used to trigger a base station (1200) to transmit on-demand signaling;
receiving (S102) the on-demand signaling transmitted by the base station (1200);
carrying out (S103) on-demand processing according to the on-demand signaling transmitted by the base station (1200),
further **characterized by** transmitting (S101) the request information in a random access channel by combining time-frequency domain resources and a random access preamble of corresponding random access channel, according to a correspondence between at least one of time-frequency domain resources and a random access preamble of the random access channel and on-demand signaling.

7. A base station (1200) comprising:
a receiving unit (1210) configured to receive request information transmitted by a user equipment (1100), the request information being used to trigger to transmit on-demand signaling;
a transmitting unit (1220) configured to transmit the on-demand signaling to carry out on-demand processing by the user equipment (1100),
wherein the receiving unit (1210) is **characterized in that** it is
configured to receive the request information that is transmitted by the user equipment (1100) in a random access channel by combining time-frequency domain resources and a random access preamble of corresponding random access channel, according to a correspondence between at least one of time-frequency domain resources and random access preamble of the random access channel and on-demand signaling.

8. A system comprising a user equipment (1100) and a base station (1200), wherein:
the user equipment (1100) comprises:
a transmitting unit (1110) configured to transmit request information, the request information being used to trigger a base station (1200) to transmit on-demand signaling;
a receiving unit (1120) configured to receive the on-demand signaling transmitted by the base station (1200);
a processing unit (1130) configured to carry out on-demand processing according to the on-demand signaling transmitted by the base station (1200),
wherein the transmitting unit (1110) is configured to transmit the request information in a random access channel by combining time-frequency domain resources and a random access preamble of corresponding random access channel, according to a correspondence between at least one of time-frequency domain resources and random access preamble of the random access channel and on-demand signaling; and
the base station (1200) comprises:
a receiving unit (1210) configured to receive the request information; and
a transmitting unit (1220) configured to transmit the on-demand signaling to carry out on-demand processing by the user equipment (1100).

## Patentansprüche

1. Benutzergerät (1100), umfassend:
eine Sendeeinheit (1110), die dazu konfiguriert ist, Anforderungsinformationen zu senden, wobei die Anforderungsinformationen verwendet werden, um eine Basisstation (1200) zu veranlassen, eine On-Demand-Signalisierung zu senden;
eine Empfangseinheit (1120), die dazu konfiguriert ist, die von der Basisstation (1200) gesendete On-Demand-Signalisierung zu empfangen;
eine Verarbeitungseinheit (1130), die dazu konfiguriert ist, eine On-Demand-Verarbeitung entsprechend der von der Basisstation (1200) gesendeten On-Demand-Signalisierung durchzuführen,
**dadurch gekennzeichnet, dass** die Sendeeinheit (1110) dazu konfiguriert ist, die Anforderungsinformationen in einem Direktzugriffskanal zu senden, indem Zeit-Frequenzbereichsressourcen und eine Direktzugriffspräambel eines entsprechenden Direktzugriffskanals entsprechend einer Übereinstimmung zwischen mindestens einem von den Zeit-Frequenzbereichsressourcen und der Direktzugriffspräambel des Direktzugriffskanals und der On-Demand-Signalisierung kombiniert werden.

2. Benutzergerät (1100) nach Anspruch 1, wobei
die Sendeeinheit (1110) dazu konfiguriert ist, die Anforderungsinformationen über Nachricht 1. zu senden.

3. Benutzergerät (1100) nach Anspruch 1, wobei
die Empfangseinheit (1120) dazu konfiguriert ist, die On-Demand-Signalisierung innerhalb eines vordefinierten Zeitfensters zu empfangen.

4. Benutzergerät (1100) nach Anspruch 3, wobei
wenn die Empfangseinheit (1120) die On-Demand-Signalisierung nicht innerhalb eines Zeitfensters empfängt, sie die On-Demand-Signalisierung innerhalb des nächsten Zeitfensters empfängt.

5. Benutzergerät (1100) nach Anspruch 1, wobei
die Empfangseinheit (1120) weiter dazu konfiguriert ist, Informationen eines Indikators zu empfangen, bevor die Sendeeinheit (1110) die Anforderungsinformationen sendet; und
die Verarbeitungseinheit (1130) weiter dazu konfiguriert ist, entsprechend den Informationen des Indikators zu bestimmen, ob die On-Demand-Signalisierung durch Senden der Anforderungsinformationen empfangen werden soll.

6. Verfahren, das von einem Benutzergerät (1100) durchgeführt wird, das Verfahren umfassend:
Senden (S101) von Anforderungsinformationen, wobei die Anforderungsinformationen verwendet werden, um eine Basisstation (1200) zu veranlassen, eine On-Demand-Signalisierung zu senden;
Empfangen (S102) der von der Basisstation (1200) gesendeten On-Demand-Signalisierung;
Durchführen (S103) einer On-Demand-Verarbeitung entsprechend der von der Basisstation (1200) gesendeten On-Demand-Signalisierung,
weiter **gekennzeichnet durch** Senden (S101) der Anforderungsinformationen in einem Direktzugriffskanal, indem Zeit-Frequenzbereichsressourcen und eine Direktzugriffspräambel eines entsprechenden Direktzugriffskanals entsprechend einer Übereinstimmung zwischen mindestens einem von den Zeit-Frequenzbereichsressourcen und einer Direktzugriffspräambel des Direktzugriffskanals und der On-Demand-Signalisierung kombiniert werden.

7. Basisstation (1200), umfassend:
eine Empfangseinheit (1210), die dazu konfiguriert ist, von einem Benutzergerät (1100) gesendete Anforderungsinformationen zu empfangen, wobei die Anforderungsinformationen verwendet werden, um zu veranlassen, dass eine On-Demand-Signalisierung gesendet wird;
eine Sendeeinheit (1220), die dazu konfiguriert ist, die On-Demand-Signalisierung zu senden, um eine On-Demand-Verarbeitung durch das Benutzergerät (1100) durchzuführen,
wobei die Empfangseinheit (1210) **dadurch gekennzeichnet ist, dass** sie dazu konfiguriert ist, die Anforderungsinformationen, die von dem Benutzergerät (1100) in einem Zufallszugriffskanal gesendet werden, zu empfangen, indem Zeit-Frequenzbereichsressourcen und eine Direktzugriffspräambel eines entsprechenden Direktzugriffskanals entsprechend einer Übereinstimmung zwischen mindestens einem von den Zeit-Frequenzbereichsressourcen und der Direktzugriffspräambel des Direktzugriffskanals und der On-Demand-Signalisierung kombiniert werden.

8. System, umfassend ein Benutzergerät (1100) und eine Basisstation (1200), wobei:
das Benutzergerät (1100) umfasst:
eine Sendeeinheit (1110), die dazu konfiguriert ist, Anforderungsinformationen zu senden, wobei die Anforderungsinformationen verwendet werden, um eine Basisstation (1200) zu veranlassen, eine On-Demand-Signalisierung zu senden;
eine Empfangseinheit (1120), die dazu konfiguriert ist, die von der Basisstation (1200) gesendete On-Demand-Signalisierung zu empfangen;
eine Verarbeitungseinheit (1130), die dazu konfiguriert ist, eine On-Demand-Verarbeitung entsprechend der von der Basisstation (1200) gesendeten On-Demand-Signalisierung durchzuführen,
wobei die Sendeeinheit (1110) dazu konfiguriert ist, die Anforderungsinformationen in einem Direktzugriffskanal zu senden, indem Zeit-Frequenzbereichsressourcen und eine Direktzugriffspräambel eines entsprechenden Direktzugriffskanals entsprechend einer Übereinstimmung zwischen mindestens einem von den Zeit-Frequenzbereichsressourcen und der Direktzugriffspräambel des Direktzugriffskanals und der On-Demand-Signalisierung kombiniert werden; und
die Basisstation (1200) umfasst:
eine Empfangseinheit (1210), die dazu konfiguriert ist, die Anforderungsinformationen zu empfangen; und
eine Sendeeinheit (1220), die dazu konfiguriert ist, die On-Demand-Signalisierung zu senden, um eine On-Demand-Verarbeitung durch das Benutzergerät (1100) durchzuführen.

## Revendications

1. Équipement (1100) utilisateur comprenant :
une unité de transmission (1110) configurée pour transmettre des informations de demande, les informations de demande étant utilisées pour déclencher une station de base (1200) pour transmettre une signalisation à la demande ;
une unité de réception (1120) configurée pour recevoir la signalisation à la demande transmise par la station de base (1200) ;
une unité de traitement (1130) configurée pour réaliser un traitement à la demande selon la signalisation à la demande transmise par la station de base (1200),
**caractérisé en ce que** l'unité de transmission (1110) est configurée pour transmettre les informations de demande dans un canal d'accès aléatoire en combinant des ressources de domaine de temps-fréquence et un préambule d'accès aléatoire de canal d'accès aléatoire correspondant, selon une correspondance entre au moins une parmi des ressources de domaine de temps-fréquence et le préambule d'accès aléatoire du canal d'accès aléatoire et la signalisation à la demande.

2. Équipement utilisateur (1100) selon la revendication 1, dans lequel
l'unité de transmission (1110) est configurée pour transmettre les informations de demande par le biais de Msg. 1.

3. Équipement utilisateur (1100) selon la revendication 1, dans lequel
l'unité de réception (1120) est configurée pour recevoir la signalisation à la demande dans une fenêtre de temps prédéfinie.

4. Équipement utilisateur (1100) selon la revendication 3, dans lequel
si l'unité de réception (1120) ne reçoit pas la signalisation à la demande dans une fenêtre de temps, elle reçoit alors la signalisation à la demande dans la fenêtre de temps suivante.

5. Équipement utilisateur (1100) selon la revendication 1, dans lequel
l'unité de réception (1120) est en outre configurée pour recevoir des informations d'indicateur avant que l'unité de transmission (1110) ne transmette les informations de demande ; et
l'unité de traitement (1130) est en outre configurée pour déterminer, selon les informations d'indicateur, s'il faut recevoir la signalisation à la demande en transmettant les informations de demande.

6. Procédé réalisé par un équipement utilisateur (1100), le procédé comprenant :
la transmission (S101) d'informations de demande, les informations de demande étant utilisées pour déclencher une station de base (1200) pour transmettre une signalisation à la demande ;
la réception (S102) de la signalisation à la demande transmise par la station de base (1200) ;
la réalisation (S103) du traitement à la demande selon la signalisation à la demande transmise par la station de base (1200),
**caractérisé en outre par** la transmission (S101) des informations de demande dans un canal d'accès aléatoire en combinant des ressources de domaine de temps-fréquence et un préambule d'accès aléatoire de canal d'accès aléatoire correspondant, selon une correspondance entre au moins une parmi des ressources de domaine de temps-fréquence et un préambule d'accès aléatoire du canal d'accès aléatoire et la signalisation à la demande.

7. Station de base (1200) comprenant :
une unité de réception (1210) configurée pour recevoir des informations de demande transmises par un équipement utilisateur (1100), les informations de demande étant utilisées pour déclencher la transmission d'une signalisation à la demande ;
une unité de transmission (1220) configurée pour transmettre la signalisation à la demande pour réaliser un traitement à la demande par l'équipement utilisateur (1100),
dans laquelle l'unité de réception (1210) est **caractérisée en ce qu'**elle est
configurée pour recevoir les informations de demande qui sont transmises par l'équipement utilisateur (1100) dans un canal d'accès aléatoire en combinant des ressources de domaine de temps-fréquence et un préambule d'accès aléatoire de canal d'accès aléatoire correspondant, selon une correspondance entre au moins une parmi des ressources de domaine de temps-fréquence et un préambule d'accès aléatoire du canal d'accès aléatoire et la signalisation à la demande.

8. Système comprenant un équipement utilisateur (1100) et une station de base (1200), dans lequel :
l'équipement utilisateur (1100) comprend :
une unité de transmission (1110) configurée pour transmettre des informations de demande, les informations de demande étant utilisées pour déclencher une station de base (1200) pour transmettre une signalisation à la demande ;
une unité de réception (1120) configurée pour recevoir la signalisation à la demande transmise par la station de base (1200) ;
une unité de traitement (1130) configurée pour réaliser un traitement à la demande selon la signalisation à la demande transmise par la station de base (1200),
dans lequel l'unité de transmission (1110) est configurée pour transmettre les informations de demande dans un canal d'accès aléatoire en combinant des ressources de domaine de temps-fréquence et un préambule d'accès aléatoire de canal d'accès aléatoire correspondant, selon une correspondance entre au moins une parmi des ressources de domaine de temps-fréquence et un préambule d'accès aléatoire du canal d'accès aléatoire et la signalisation à la demande ; et
la station de base (1200) comprend :
une section de réception (1210) configurée pour recevoir les informations de demande ; et
une unité de transmission (1220) configurée pour transmettre la signalisation à la demande pour réaliser un traitement à la demande par l'équipement utilisateur (1100).
